(19) Europäisches Patentamt
European Patent Office
Office européen des brevets

(11) EP 2 908 182 A1

(12) **EUROPEAN PATENT APPLICATION**
published in accordance with Art. 153(4) EPC

(43) Date of publication:
**19.08.2015 Bulletin 2015/34**

(21) Application number: **13847982.9**

(22) Date of filing: **10.10.2013**

(51) Int Cl.:
***G03H 1/02*** (2006.01) ***C08L 63/00*** (2006.01)
***G11B 7/24035*** (2013.01) ***G11B 7/244*** (2006.01)

(86) International application number:
**PCT/JP2013/077626**

(87) International publication number:
**WO 2014/061559 (24.04.2014 Gazette 2014/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.10.2012 JP 2012227784**

(71) Applicant: **Daicel Corporation**
**Osaka-shi, Osaka 530-0001 (JP)**

(72) Inventors:
- **MIZUTA, Tomoya**
  **Himeji-shi**
  **Hyogo 671-1283 (JP)**
- **MIYAKE, Hiroto**
  **Himeji-shi**
  **Hyogo 671-1283 (JP)**

(74) Representative: **Grünecker Patent- und Rechtsanwälte**
**PartG mbB**
**Leopoldstraße 4**
**80802 München (DE)**

(54) **PHOTOSENSITIVE COMPOSITION FOR FORMING VOLUME HOLOGRAM RECORDING LAYER**

(57) Provided is a photosensitive composition for volume hologram recording layer formation. The photosensitive composition gives a volume hologram recording layer that has excellent moisture resistance and thermal stability, less undergoes cure shrinkage upon hologram recording, and offers excellent multiple recording properties.

The photosensitive composition for volume hologram recording layer formation includes components (A), (B), (C), (D), and (E). Component (A) is at least one cationically polymerizable compound including a compound represented by Formula (1). Component (B) is a compound containing an active-proton-containing functional group. Component (C) is a thermal acid generator. Component (D) is a radically polymerizable compound. Component (E) is a radical-polymerization initiator. Components (A), (B), and (C) constitute a precursor material for three-dimensional cross-linked polymer matrix. Components (A), (B), and (C) are present in the precursor material for three-dimensional cross-linked polymer matrix in such proportions that the molar ratio of the active-proton-containing functional group of Component (B) to cycloaliphatic epoxy groups of the compound represented by Formula (1) in Component (A) is from 0.01 to 0.3. Formula (1) is expressed as follows:

[Chem. 1]

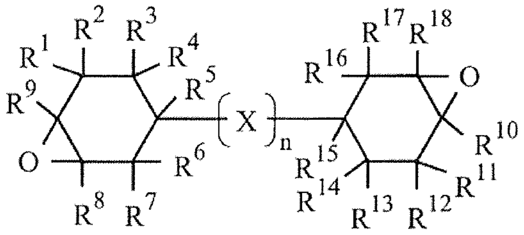

(1)

EP 2 908 182 A1

[Fig. 1]

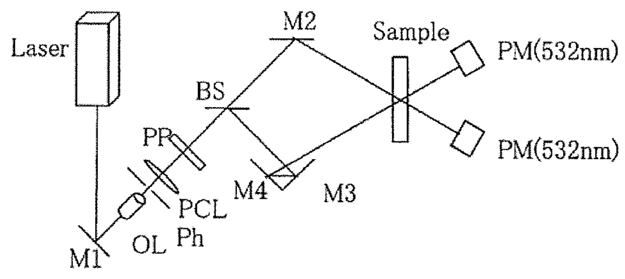

## Description

### Technical Field

The present invention relates to photosensitive compositions for volume hologram recording layer formation. The photosensitive compositions are used for the formation of volume hologram recording media that record or write a multiplicity of information three-dimensionally as volume holograms using laser beams. The present application claims priority to Japanese Patent Application No. 2012-227784 filed in Japan on October 15, 2012, the entire contents of which are incorporated herein by reference.

### Background Art

Holographic memories record or write information as holograms and receive attention as next-generation information recording media that enable large-capacity storage and high-speed transfer. Widely known hologram recording media each include a recording layer (hologram recording layer) formed from a photosensitive composition for volume hologram recording layer formation. The photosensitive composition includes a radically polymerizable monomer, a thermoplastic binder resin, a photo-radical polymerization initiator, and a sensitizing dye as principal components.

The hologram recording media, when subjected to interference exposure of the recording layer, can bear information as a record. Specifically, the radically polymerizable monomer undergoes polymerization in a portion irradiated with strong light and thereby diffuses from a portion irradiated with weak light to the portion irradiated with strong light. This invites concentration gradient of the radically polymerizable monomer and causes a difference in refractive index between the portions depending on the light intensity to form a hologram.

In general, such hologram recording media each structurally include a polymer matrix and a photopolymerizable monomer dispersed in the polymer matrix and require a certain level of rigidity (hardness). Unfortunately, however, the hologram recording media, if designed to have a rigid matrix, fail to bear sufficient free space in the matrix and fail to offer a sufficient difference in refractive index, because the free space allows the photopolymerizable monomer to diffuse. In contrast, the hologram recording media, if designed to have a flexible matrix so as to have larger free space in the matrix, suffer from local shrinkage of the recording layer incident to polymerization of the radically polymerizable monomer. Disadvantageously, this impedes correct reproduction (reading) of the recorded data.

Typically, Patent Literature (PTL) 1 and PTL 2 propose photosensitive compositions for volume hologram recording layer formation, where the compositions each include an ester-form cycloaliphatic epoxy compound as a polymer matrix precursor material. However, when the compositions give volume hologram recording layers to constitute volume hologram recording media, the resulting volume hologram recording media are insufficient in moisture resistance, thermal stability, low cure shrinkage, and storage capacity.

### Citation List

### Patent Literature

PTL 1: Japanese Unexamined Patent Application Publication (JP-A) No. 2008-152170
PTL 2: PCT International Publication Number WO 2009/014133

## Summary of Invention

### Technical Problem

Accordingly, it is an object of the present invention to provide a photosensitive composition for volume hologram recording layer formation, where the photosensitive composition is capable of forming a volume hologram recording layer that is highly resistant to moisture, is satisfactorily thermally stable, less undergoes cure shrinkage upon hologram recording (upon hologram formation), and still offers excellent multiple recording properties.

It is another object of the present invention to provide a volume hologram recording medium including a volume hologram recording layer that is highly resistant to moisture, is satisfactorily thermally stable, less undergoes cure shrinkage upon hologram recording (upon hologram formation), and still offers excellent multiple recording properties.

Solution to Problem

After intensive investigations to achieve the objects, the present inventors have found that at least one cationically polymerizable compound including a compound represented by Formula (1), when used as a precursor material for three-dimensional cross-linked polymer matrix, can give a hologram recording medium that is highly resistant to moisture, is satisfactorily thermally stable, and extremely less undergoes cure shrinkage upon hologram recording (upon hologram formation). The present inventors have further found that a compound containing an active-proton-containing functional group, when used in combination with the compound represented by Formula (1) as the precursor material for three-dimensional cross-linked polymer matrix, contributes to dramatically better cationic curability and to the formation of a three-dimensional cross-linked polymer matrix bearing finely divided free space; and this can give a hologram recording medium including a volume hologram recording layer that less undergoes cure shrinkage and has an extremely large storage capacity (i.e., has excellent multiple recording properties). The present invention has been made based on these findings.

Specifically, the present invention provides, in one aspect, a photosensitive composition for volume hologram recording layer formation that contains Components (A), (B), (C), (D), and (E). Component (A) is at least one cationically polymerizable compound including a compound represented by Formula (1). Component (B) is a compound containing an active-proton-containing functional group. Component (C) is a thermal acid generator. Component (D) is a radically polymerizable compound. Component (E) is a radical-polymerization initiator. Components (A), (B), and (C) constitute a precursor material for three-dimensional cross-linked polymer matrix. Components (A), (B), and (C) are present in the precursor material for three-dimensional cross-linked polymer matrix in such proportions that the molar ratio of the active-proton-containing functional group of Component (B) to cycloaliphatic epoxy groups of the compound represented by Formula (1) in Component (A) is from 0.01 to 0.3. Formula (1) is expressed as follows:

[Chem. 1]

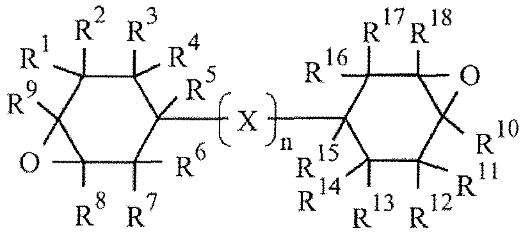

(1)

where n represents an integer from 0 to 10; X represents, independently in each occurrence, one divalent group selected from the group consisting of oxygen, $-CH_2-$,$-C(CH_3)_2-$, $-CBr_2-$, $-C(CBr_3)_2-$, $-CF_2-$, $-C(CF_3)_2-$, $-CCl_2-$,$-C(CCl_3)_2-$, and $-CH(C_6H_5)-$, where, when n is 2 or more, two or more occurrences of X may be identical or different; $R^1$ to $R^{18}$ are each, identically or differently, selected from hydrogen, halogen, a hydrocarbon group optionally containing oxygen or halogen, and optionally substituted alkoxy.

Component (A) preferably further includes at least one cationically polymerizable compound selected from the group consisting of oxetane compounds, vinyl ether compounds, and epoxy compounds excluding the compound represented by Formula (1).

The present invention further provides, in another aspect, a volume hologram recording medium including a volume hologram recording layer. The volume hologram recording layer is prepared by heat-treating the photosensitive composition for volume hologram recording layer formation. The volume hologram recording layer contains a three-dimensional cross-linked polymer matrix, the radically polymerizable compound as Component (D), and the radical-polymerization initiator as Component (E).

The present invention relates to followings.

(1) A photosensitive composition for volume hologram recording layer formation. The photosensitive composition contains Components (A), (B), (C), (D), and (E). Component (A) is at least one cationically polymerizable compound including a compound represented by Formula (1). Component (B) is a compound containing an active-proton-containing functional group. Component (C) is a thermal acid generator. Component (D) is a radically polymerizable compound. Component (E) is a radical-polymerization initiator. Components (A), (B), and (C) constitute a precursor material for three-dimensional cross-linked polymer matrix. Components (A), (B), and (C) are present in the precursor material for three-dimensional cross-linked polymer matrix in such proportions that the molar ratio of the active-proton-containing functional group of Component (B) to the cycloaliphatic epoxy groups of the compound represented by Formula (1) in Component (A) is from 0.01 to 0.3.

(2) In the photosensitive composition for volume hologram recording layer formation according to (1), Component

(A) may further contain at least one cationically polymerizable compound selected from the group consisting of oxetane compounds, vinyl ether compounds, and epoxy compounds excluding the compound represented by Formula (1).

(3) In the photosensitive composition for volume hologram recording layer formation according to (1) or (2), Component (B) may be selected typically from monohydric alcohols such as methanol, ethanol, isopropanol, and allyl alcohol; polyhydric alcohols such as ethylene glycol, 1,3-butanediol, propylene glycol, neopentyl glycol, polyethylene glycols, trimethylolpropane, pentaerythritol, and dipentaerythritol; esters such as ethylene glycol monoacetate, propylene glycol monoacetate, and dipropylene glycol monoacetate; ethylene glycol monoalkyl ethers; diethylene glycol monoalkyl ethers; propylene glycol monoalkyl ethers; dipropylene glycol monoalkyl ethers; butylene glycol monoalkyl ethers; phenolic hydroxy such as phenol, catechol, biphenol, bisphenol-A, bisphenol-F, and novolac, and oligomers obtained by ring-opening addition of a lactone compound to them; and high molecular compounds such as polyethylene glycols.

(4) In the photosensitive composition for volume hologram recording layer formation according to any one of (1) to (3), Component (C) may include an aromatic sulfonium salt.

(5) In the photosensitive composition for volume hologram recording layer formation according to any one of (1) to (4), Component (D) may include a compound containing one addition-polymerizable ethylenically unsaturated double bond.

(6) In the photosensitive composition for volume hologram recording layer formation according to any one of (1) to (5), Component (E) may include a photo-radical polymerization initiator.

(7) The photosensitive composition for volume hologram recording layer formation according to any one of (1) to (6) may further contain a sensitizing dye.

(8) The photosensitive composition for volume hologram recording layer formation according to any one of (1) to (7) may contain Component (A) in a content of 5 to 90 percent by weight based on the total amount (100 percent by weight) of the photosensitive composition for hologram recording layer formation.

(9) The photosensitive composition for volume hologram recording layer formation according to any one of (1) to (8) may contain Component (B) in a content of 0.01 to 40 percent by weight based on the total amount (100 percent by weight) of the photosensitive composition for hologram recording layer formation.

(10) The photosensitive composition for volume hologram recording layer formation according to any one of (1) to (9) may contain Component (D) in a content of 5 to 80 percent by weight based on the total amount (100 percent by weight) of the photosensitive composition for hologram recording layer formation.

(11) A volume hologram recording medium including a volume hologram recording layer. The volume hologram recording layer is prepared by heat-treating the photosensitive composition for volume hologram recording layer formation according to any one of (1) to (10). The volume hologram recording layer contains a three-dimensional cross-linked polymer matrix, the radically polymerizable compound as Component (D), and the radical-polymerization initiator as Component (E).

Advantageous Effects of Invention

The photosensitive composition for volume hologram recording layer formation according to the present invention has the above-mentioned configuration. Upon matrix formation, the compound containing an active-proton-containing functional group reacts with a cationically polymerized chain end to cause a chain transfer reaction. This allows a polymer constituting a three-dimensional cross-linked polymer matrix to have a lower molecular weight and still allows the polymer to be more satisfactorily cationically cured. This allows the resulting three-dimensional cross-linked polymer matrix to be highly moisture resistant, satisfactorily thermally stabile, and moderately rigid and to bear finely divided free space. The three-dimensional cross-linked polymer matrix contributes to the formation of a volume hologram recording layer that has high sensitivity and excellent multiple recording properties and less undergoes cure shrinkage. The photosensitive composition for volume hologram recording layer formation according to the present invention, upon use, can provide a volume hologram recording medium that offers a large storage capacity and high refractive-index modulation and less undergoes volume change as a result of photoirradiation.

Brief Description of Drawings

[Fig. 1] Fig. 1 is a schematic diagram illustrating an optical system for use in examples and comparative examples to determine diffraction efficiency and cure shrinkage percentage.

Description of Embodiments

Photosensitive Composition for Volume Hologram Recording Layer Formation

The photosensitive composition for volume hologram recording layer formation according to the present invention contains a precursor material for three-dimensional cross-linked polymer matrix, Component (D), and Component (E). The precursor material for three-dimensional cross-linked polymer matrix includes Components (A), (B), and (C). Component (A) is at least one cationically polymerizable compound including a compound represented by Formula (1). Component (B) is a compound containing an active-proton-containing functional group. Component (C) is a thermal acid generator. Component (D) is a radically polymerizable compound. Component (E) is a radical-polymerization initiator. The precursor material for three-dimensional cross-linked polymer matrix includes Component (A), (B), and (C) in such proportions that the molar ratio of the active-proton-containing functional group of Component (B) to the cycloaliphatic epoxy groups of the compound represented by Formula (1) in Component (A) is from 0.01 to 0.3.

Component (A)

Component (A) for use in the present invention includes at least one cationically polymerizable compound including a compound represented by Formula (1):

[Chem. 1]

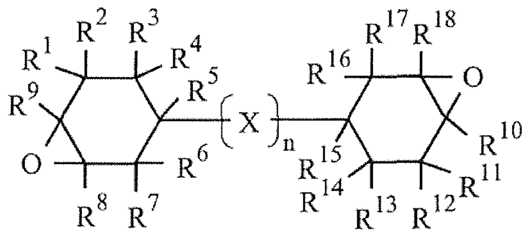

(1)

In Formula (1), n represents an integer from 0 to 10. X represents, independently in each occurrence, one divalent group selected from the group consisting of oxygen, $-CH_2-$,$-C(CH_3)_2-$, $-CBr_2-$, $-C(CBr_3)_2-$, $-CF_2-$, $-C(CF_3)_2-$, $-CCl_2-$,$-C(CCl_3)_2-$, and $-CH(C_6H_5)-$. When n is 2 or more, two or more occurrences of X may be identical or different. $R^1$ to $R^{18}$ are each, identically or differently, selected from hydrogen, halogen, a hydrocarbon group optionally containing oxygen or halogen, and optionally substituted alkoxy.

The halogen as $R^1$ to $R^{18}$ is exemplified by fluorine and chlorine. The hydrocarbon group and alkoxy may contain carbon atoms in numbers not critical, but each preferably from 1 to 5. Namely, the hydrocarbon group and alkoxy are respectively preferably a $C_1$-$C_5$ hydrocarbon group and $C_1$-$C_5$ alkoxy. The hydrocarbon group optionally containing oxygen or halogen is exemplified by alkoxyalkyl such as methoxyethyl; and haloalkyl such as trifluoromethyl. The alkoxy may have one or more substituents. The substituents are exemplified by $C_1$-$C_5$ alkyl.

Component (A) is exemplified by 3,4,3',4'-diepoxybicyclohexyl, 2,2-bis(3,4-epoxycyclohexyl)propane, 2,2-bis(3,4-epoxycyclohexyl)-1,3-hexafluoropropane, bis(3,4-epoxycyclohexyl)methane, and 1-[1,1-bis(3,4-epoxycyclohexyl)]ethylbenzene. Component (A) may include each of them alone or in combination.

Component (A) for use herein preferably further contains, in addition to the compound(s) represented by Formula (1), at least one cationically polymerizable compound selected from the group consisting of oxetane compounds, vinyl ether compounds, and epoxy compounds excluding the compounds represented by Formula (1).

The epoxy compounds excluding the compounds represented by Formula (1) are exemplified by compounds as follows:

(a1) epoxy compounds containing an aliphatic ring (aliphatic carbon ring) in the molecule (excluding compounds containing an aromatic ring);
(a2) epoxy compounds containing an aromatic ring in the molecule; and
(a3) epoxy compounds containing neither aromatic ring nor aliphatic ring in the ring.

The epoxy compounds (a1) containing an aliphatic ring in the molecule are exemplified by compounds containing a cycloaliphatic epoxy group; compounds containing an aliphatic ring, and an epoxy group directly bonded to the aliphatic ring via single bond; and compounds containing an aliphatic ring and a glycidyl ether group. As used herein the term "cycloaliphatic epoxy group" refers to a group in which two adjacent carbon atoms constituting an aliphatic ring form a ring with one oxygen atom.

The compounds containing a cycloaliphatic epoxy group are exemplified by compounds containing one cycloaliphatic epoxy group per molecule, such as limonene diepoxide (trade name CELLOXIDE 3000, supplied by Daicel Corporation), 3,4-epoxycyclohexylmethyl alcohol, 1-vinyl-3,4-epoxycyclohexane (trade name CELLOXIDE 2000, supplied by Daicel Corporation), and 3,4-epoxycyclohexylethyltrimethoxysilane; compounds containing two cycloaliphatic epoxy groups per molecule, such as bis(3,4-epoxycyclohexyl) adipate, 3,4-epoxycyclohexylmethyl (3,4-epoxy)cyclohexanecarboxylate (trade name CELLOXIDE 2021, supplied by Daicel Corporation), (3,4-epoxy-6-methylcyclohexyl)methyl-3',4'-epoxy-6-methylcyclohexanecarboxylate, and ethylene-1,2-bis(3,4-epoxycyclohexanecarboxylate); and compounds containing three or more cycloaliphatic epoxy groups per molecule.

The compounds containing an aliphatic ring and an epoxy group directly bonded to the aliphatic ring via single bond are exemplified by EHPE3150 (supplied by Daicel Corporation).

The compounds containing an aliphatic ring and a glycidyl ether group are exemplified by glycidyl ethers of alicyclic alcohols. Of the aliphatic alcohols, alicyclic polyhydric alcohols are preferred. The compounds are available as products under the trade names of TETRAD-C (from MITSUBISHI GAS CHEMICAL COMPANY, INC.) and EPB-13 (from Nippon Soda Co., Ltd.).

The epoxy compounds (a2) containing an aromatic ring in the molecule are exemplified by compounds containing an aromatic ring and a glycidyl ether group, such as epi-bis type glycidyl ether epoxy resins prepared by subjecting a bisphenol to a condensation reaction with an epihalohydrin, where the bisphenol is exemplified by bisphenol-A, bisphenol-F, bisphenol-S, and fluorene-bisphenol, and the epihalohydrin is exemplified by epichlorohydrin; high-molecular-weight epi-bis type glycidyl ether epoxy resins prepared by subjecting any of the epi-bis type glycidyl ether epoxy resins further to an addition reaction with the bisphenol; novolac-alkyl type glycidyl ether epoxy resins prepared by subjecting a phenol and an aldehyde to a condensation reaction to give a polyhydric phenol, and subjecting the polyhydric phenol further to a condensation reaction with an epihalohydrin, where the phenol is exemplified by phenol, cresol, xylenol, resorcinol, catechol, bisphenol-A, bisphenol-F, and bisphenol-S, the aldehyde is exemplified by formaldehyde, acetaldehyde, benzaldehyde, hydroxybenzaldehyde, and salicylaldehyde, and the epihalohydrin is exemplified by epichlorohydrin. The epoxy compounds (a2) are also available as commercial products typically under the trade names of TETRAD-X (from MITSUBISHI GAS CHEMICAL COMPANY, INC.); and EPIKOTE 1031S (from Mitsubishi Chemical Corporation).

The epoxy compounds (a3) containing neither aromatic ring nor aliphatic ring in the molecule are exemplified by glycidyl ethers of polyhydric alcohols; glycidyl esters of monovalent or multivalent carboxylic acids, where the carboxylic acids are exemplified by acetic acid, propionic acid, butyric acid, stearic acid, adipic acid, sebacic acid, maleic acid, and itaconic acid; and epoxidized products of oils and fats containing a double bond, such as epoxidized linseed oils, epoxidized soybean oils, and epoxidized castor oils.

The oxetane compounds are not limited, as long as being compounds containing one or more oxetanyl groups per molecule, and are exemplified by monofunctional oxetane compounds and multifunctional oxetane compounds.

Such oxetanyl-containing compounds are exemplified by 3-ethyl-3-(phenoxymethyl)oxetane (POX), di[1-ethyl(3-oxetanyl)]methyl ether (DOX), 3-ethyl-3-(2-ethylhexyloxymethyl)oxetane (EHOX), 3-ethyl-3-([3-(triethoxysilyl)propoxy]methyl)oxetane (TESOX), oxetanylsilsesquioxane (OX-SQ), and phenol-novolac oxetane (PNOX-1009) (each supplied by Toagosei Co., Ltd.). Component (A) may include each of different oxetane compounds alone or in combination.

The vinyl ether compounds are not limited, as long as being compounds containing one or more vinyl ether groups per molecule, and are exemplified by monofunctional vinyl ether compounds and multifunctional vinyl ether compounds.

The vinyl ether compounds are exemplified by cyclic ether type vinyl ethers such as isosorbide divinyl ether and oxanorbornene divinyl ether, of which vinyl ethers containing a cyclic ether group such as oxirane ring, oxetane ring, or oxolane ring are preferred; aryl vinyl ethers such as phenyl vinyl ether; alkyl vinyl ethers such as n-butyl vinyl ether, octyl vinyl ether, and 2-ethylhexyl vinyl ether; cycloalkyl vinyl ethers such as cyclohexyl vinyl ether; other vinyl ether compounds such as hydroquinone divinyl ether, 1,4-butanediol divinyl ether, cyclohexane divinyl ether, cyclohexanedimethanol divinyl ether, 2-hydroxyethyl vinyl ether (HEVE), diethylene glycol monovinyl ether (DEGV), 2-hydroxybutyl vinyl ether (HBVE), and triethylene glycol divinyl ether; and compounds corresponding to them, except for containing one or more substituents at the alpha position and/or the beta position, where the substituents are exemplified by $C_1$-$C_5$ alkyl and aryl. Component (A) may include each of different vinyl ether compounds alone or in combination.

Component (A) may include any of compounds containing different cationically polymerizable groups in the molecule. typically, Component (A) may include a compound containing both an epoxy group and a vinyl ether group in the molecule. The compound of this type is exemplified by compounds described in JP-A No. 2009-242242. Component (A) may also include a compound containing an oxetanyl group and a vinyl ether group in the molecule. The compound of this type is exemplified by compounds described in JP-A No. 2008-266308.

The photosensitive composition for volume hologram recording layer formation according to the present invention may contain Component (A) in a content of typically from about 5 to about 90 percent by weight, preferably from 20 to 80 percent by weight, and particularly preferably from 40 to 80 percent by weight, based on the total amount (100

percent by weight) of the photosensitive composition. When Component (A) contains two or more different compounds, the term "content" refers to the total amount (total content) of them. The photosensitive composition, if containing Component (A) in a content less than the range, may readily have a higher cure shrinkage percentage. The photosensitive composition, if containing Component (A) in a content greater than the range, may offer a narrower dynamic range.

The photosensitive composition for volume hologram recording layer formation according to the present invention may contain the compound represented by Formula (1) in a content of typically from about 10 to about 90 percent by weight, preferably from 20 to 60 percent by weight, and particularly preferably from 30 to 50 percent by weight, based on the total amount (100 percent by weight) of the photosensitive composition. The photosensitive composition, if containing the compound represented by Formula (1) in a content less than the range, may readily have a higher cure shrinkage percentage. In contrast, the photosensitive composition, if containing the compound represented by Formula (1) in a content greater than the range, may offer a narrower dynamic range.

The photosensitive composition for volume hologram recording layer formation according to the present invention may contain the cationically polymerizable compound(s) excluding the compounds represented by Formula (1) in a content of typically from about 5 to about 80 percent by weight, preferably from 5 to 60 percent by weight, and particularly preferably from 5 to 40 percent by weight, based on the total amount (100 percent by weight) of the photosensitive composition. The photosensitive composition, if containing the cationically polymerizable compound(s) excluding the compounds represented by Formula (1) in a content less than the range, may readily offer a narrower dynamic range. In contrast, the photosensitive composition, if containing the cationically polymerizable compound(s) excluding the compounds represented by Formula (1) in a content greater than the range, may readily have a higher cure shrinkage percentage.

Component (B)

Component (B) for use herein includes a compound containing an active-proton-containing functional group. The active-proton-containing functional group acts as a functional group offering dramatically higher cationic curability and is exemplified by hydroxy, carboxy, phosphate, thiol, and amino groups. Among them, preferred in the present invention are compounds containing hydroxy as the active-proton-containing functional group. These are preferred for promoting the cationic polymerization reaction. The compound containing an active-proton-containing functional group probably functions in a manner as follows. The active-proton-containing functional group of the compound is bonded to a cationically polymerized chain end to cause a chain transfer reaction. The chain transfer reaction terminates cationic polymerization and simultaneously transfers polymerization to another chain reaction (causes another chain reaction to occur). This probably causes the resulting polymer to have a lower molecular weight and to offer better cationic curability.

The compounds containing hydroxy as the active-proton-containing functional group are exemplified by monohydric alcohols such as methanol, ethanol, isopropanol, and allyl alcohol; polyhydric alcohols such as ethylene glycol, 1,3-butanediol, propylene glycol, neopentyl glycol, polyethylene glycols, trimethylolpropane, pentaerythritol, and dipentaerythritol; esters such as ethylene glycol monoacetate, propylene glycol monoacetate, and dipropylene glycol monoacetate; ethylene glycol monoalkyl ethers; diethylene glycol monoalkyl ethers; propylene glycol monoalkyl ethers; dipropylene glycol monoalkyl ethers; butylene glycol monoalkyl ethers; phenolic hydroxy such as phenol, catechol, biphenol, bisphenol-A, bisphenol-F, and novolac, and oligomers prepared by ring-opening and addition of them with a lactone compound; and high molecular compounds such as polyethylene glycols. Component (B) may include each of them alone or in combination.

The photosensitive composition for volume hologram recording layer formation according to the present invention may contain Component (B) in a content of typically from about 0.01 to about 40 percent by weight, preferably from 0.01 to 20 percent by weight, and particularly preferably from 0.01 to 10 percent by weight, based on the total amount (100 percent by weight) of the photosensitive composition. When Component (B) contains two or more different compounds, the term "content" refers to the total content of them. The photosensitive composition, if containing Component (B) in a content less than the range, may readily offer a narrower dynamic range. In contrast, the photosensitive composition, if containing Component (B) in a content greater than the range, may readily offer a higher cure shrinkage percentage.

The photosensitive composition may contain Component (B) and the compound represented by Formula (1) in Component (A) in such proportions that the molar ratio of the active-proton-containing functional group of Component (B) to the cycloaliphatic epoxy groups of the compound represented by Formula (1) in Component (A) is from 0.01 to 0.3, preferably from 0.01 to 0.27, and particularly preferably from 0.01 to 0.25. Undesirably, the active-proton-containing functional group, if present in a proportion less than the range, may fail to exhibit sufficient effects as the functional group. In contrast, the functional group, if present in a proportion greater than the range, may contrarily cause adverse effects on the cationic polymerization to be larger than the advantageous effects. This may undesirably impede sufficient three-dimensional assembly of the matrix.

Component (C)

Component (C) for use herein includes a thermal acid generator. The thermal acid generator is not limited, as long as being a compound that activates (initiates) the thermal cationic polymerization of Component (A) (the cationically polymerizable compound). Such thermal acid generator for use herein is preferably exemplified by aromatic sulfonium salts such as products available under the trade names of San-Aid SI-60L, San-Aid SI-80L, San-Aid SI-100L, San-Aid SI-110L, and San-Aid SI-150L (each from SANSHIN CHEMICAL INDUSTRY CO., LTD.).

Component (D)

Component (D) for use herein includes a radically polymerizable compound that is a compound containing one or more radically polymerizable groups per molecule. The "radically polymerizable group" refers to a group containing a radically polymerizable carbon-carbon unsaturated double bond. Of such radically polymerizable compounds, photo-radically polymerizable compounds are preferred. Specifically, Component (D) preferably includes any of compounds containing at least one addition-polymerizable ethylenically unsaturated double bond. The compounds are exemplified by vinyl compounds; unsaturated carboxylic acids such as (meth)acrylic acid; salts of the unsaturated carboxylic acids; ester compounds of the unsaturated carboxylic acids with aliphatic polyhydric alcohols; and amide compounds between the unsaturated carboxylic acids and aliphatic polyvalent amine compounds.

The photo-radically polymerizable compounds are exemplified by styrene, 2-chlorostyrene, 2-bromostyrene, methoxystyrene, 1-vinylnaphthalene, 2-vinylnaphthalene, divinylbenzene, 2-phenoxyethyl acrylate, hydroxyethylated o-phenylphenol acrylate (available typically under the trade name of A-LEN-10 from Shin-Nakamura Chemical Co., Ltd.), 9,9-bis[4-(2-acryloyloxyethoxy)phenyl]fluorene (available typically under the trade name of A-BPEF from Shin-Nakamura Chemical Co., Ltd.), bisphenol-A ethylene glycol monoacrylate, ethoxylated bisphenol-A diacrylate (available typically under the trade name of A-BPE-4 from Shin-Nakamura Chemical Co., Ltd.), triethylene glycol monoacrylate, 1,3-butanediol monoacrylate, tetramethylene glycol monoacrylate, propylene glycol monoacrylate, neopentyl glycol monoacrylate, ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolethane triacrylate, tetraethylene glycol diacrylate, pentaerythritol diacrylate, pentaerythritol triacrylate (available typically under the trade name of A-TMM-3 from Shin-Nakamura Chemical Co., Ltd.), pentaerythritol tetraacrylate, dipentaerythritol diacrylate, dipentaerythritol triacrylate, dipentaerythritol tetraacrylate, dipentaerythritol hexaacrylate, bisphenol-A ethylene glycol diacrylate, 2-phenoxyethyl methacrylate, ethylene glycol monomethacrylate, triethylene glycol monomethacrylate, 1,3-butanediol monomethacrylate, tetramethylene glycol monomethacrylate, propylene glycol monomethacrylate, neopentyl glycol monomethacrylate, ethylene glycol dimethacrylate, triethylene glycol dimethacrylate, 1,3-butanediol dimethacrylate, tetramethylene glycol methacrylate, propylene glycol dimethacrylate, neopentyl glycol dimethacrylate, trimethylolpropane trimethacrylate, trimethylolethane trimethacrylate, tetraethylene glycol dimethacrylate, pentaerythritol dimethacrylate, pentaerythritol trimethacrylate, pentaerythritol tetramethacrylate, dipentaerythritol dimethacrylate, dipentaerythritol trimethacrylate, dipentaerythritol tetramethacrylate, dipentaerythritol hexamethacrylate, and bisphenol-A ethylene glycol dimethacrylate. Component (D) may include each of them alone or in combination.

The photosensitive composition for volume hologram recording layer formation according to the present invention may contain Component (D) in a content of typically from about 5 to about 80 percent by weight, preferably from 10 to 60 percent by weight, and particularly preferably from 10 to 40 percent by weight, based on the total amount (100 percent by weight) of the photosensitive composition. When Component (D) includes two or more different compounds, the term "content" refers to the total content of them. The photosensitive composition, if containing Component (D) in a content less than the range, may readily offer a narrower dynamic range. In contrast, the photosensitive composition, if containing Component (D) in a content greater than the range, may readily offer a higher cure shrinkage percentage.

Component (E)

Component (E) for use herein includes a radical-polymerization initiator. When Component (D) includes a photo-radically polymerizable compound, Component (E) preferably includes a photo-radical polymerization initiator. The photo-radical polymerization initiator is not limited, as long as being a compound that activates (initiates) photo-radical polymerization of Component (D). Such photo-radical polymerization initiators are exemplified by oxime esters such as 1-[4-(phenylthio)]-1,2-octanedione 2-(0-benzoyloxime) (trade name IRGACURE OXE01, supplied by BASF SE) and 1-[9-ethyl-6-(2-methylbenzoyl)-9H-carbazol-3-yl]ethanone O-acetyl oxime (trade name IRGACURE OXE02, supplied by BASF SE); peroxy esters such as 3,3',4,4'-tetra(t-butylperoxycarbonyl)benzophenone (trade name BTTB, supplied by NOF CORPORATION), a regioisomeric mixture of 3,3'-di(t-butylperoxycarbonyl)-4,4'-di(methoxycarbonyl)benzophenone, 3,3'-di(methoxycarbonyl)-4,4'-di(t-butylperoxycarbonyl)benzophenone, and 3,4'-di(t-butylperoxycarbonyl)-3',4-di(methoxycarbonyl)benzophenone, and t-butyl peroxybenzoate (trade name PERBUTYL Z, supplied by NOF CORPORATION); peroxides such as t-butyl hydroperoxide and di-t-butyl peroxide; benzoin and benzoin alkyl ethers, such as benzoin, benzoin methyl ether, benzoin ethyl ether, and benzoin isopropyl ether; acetophenones such as acetophenone, 2,2-dimethoxy-2-phenylacetophenone, 2,2-diethoxy-2-phenylacetophenone, 1,1-dichloroacetophenone, 2-methyl-1-[4-(methylthio)phenyl]-2-morpholino-propan-1-one, and 2-benzyl-2-dimethylamino-1-(4-morpholinophenyl)-butan-1-one; anthraquinones such as 2-methylanthraquinone, 2-ethylanthraquinone, 2-t-butylanthraquinone, 1-chloroanthraquinone, and 2-amylanthraquinone; thioxanthones such as 2,4-dimethylthioxanthone, 2,4-diethylthioxanthone, 2-chlorothioxanthone, and 2,4-isopropylthioxanthone; ketals such as acetophenone dimethyl ketal and benzil dimethyl ketal; benzophenones such as benzophenone; xanthones; 1,7-bis(9-acridinyl)heptane; titanocene compounds such as bis(η5-2,4-cyclopentadien-1-yl)-bis(2,6-difluoro-3-(1H-pyrrol-1-yl)-phenyl)titanium (trade name IRGACURE 784, supplied by BASF SE); and aromatic iodonium salts and aromatic sulfonium salts. Component (E) may include each of them alone or in combination.

Other Components

The photosensitive composition for volume hologram recording layer formation according to the present invention may further contain one or more of other components (e.g., sensitizing dyes and plasticizers) as needed, in addition to the above-mentioned components. In particular, the photosensitive composition according to the present invention preferably contains a sensitizing dye.

The sensitizing dye is not limited, as long as being one that sensitizes the photo-radical polymerization initiator. The sensitizing dye is exemplified by dyes of thiopyrylium salts, melocyanines, quinolines, styrylquinolines, ketocoumarins, thioxanthenes, xanthenes, oxonols, cyanines, rhodamines, and pyrylium salts. Typically, when the photosensitive composition is used in applications requiring high transparency as in optical elements (optical devices), the sensitizing dye preferably includes one that becomes colorless and transparent as a result of decomposition by heat treatment and/or ultraviolet irradiation after hologram recording. Such preferred sensitizing dyes are exemplified by cyanine dyes. The photosensitive composition may contain each of them alone or in combination.

Volume Hologram Recording Medium

The volume hologram recording medium according to the present invention includes a volume hologram recording layer. The volume hologram recording layer is prepared by heat-treating the photosensitive composition for volume hologram recording layer formation and contains a three-dimensional cross-linked polymer matrix, the radically polymerizable compound as Component (D), and the radical-polymerization initiator as Component (E).

The heat treatment of the photosensitive composition for volume hologram recording layer formation according to the present invention allows Component (A) in the composition to undergo cationic polymerization and to form a three-dimensional cross-linked polymer matrix. This provides a volume hologram recording layer that contains the three-dimensional cross-linked polymer matrix, the radically polymerizable compound as Component (D), and the radical-polymerization initiator as Component (E).

The photosensitive composition for volume hologram recording layer formation according to the present invention contains the compound containing an active-proton-containing functional group as Component (B). Upon cationic polymerization, the compound containing an active-proton-containing functional group is bonded to a cationically polymerized chain end to cause a chain transfer reaction. This inhibits the copolymer of the cationically polymerizable compound constituting the three-dimensional cross-linked polymer matrix from having a higher molecular weight (namely, allows the copolymer to have a lower molecular weight) and simultaneously provides better cationic curability. The resulting three-dimensional cross-linked polymer matrix is highly resistant to moisture, satisfactorily thermally stable, and moderately rigid, and bears finely divided free space.

In a specific embodiment, the volume hologram recording medium according to the present invention includes a first substrate, a second substrate, and the volume hologram recording layer disposed between the first substrate and the second substrate. Specifically, the volume hologram recording medium according to the present invention may be produced typically by placing the photosensitive composition for volume hologram recording layer formation according to the present invention between a pair of substrates (first substrate and second substrate), and heat-treating the resulting article. The volume hologram recording medium according to the present invention may typically be a transmission volume hologram recording medium.

The heat treatment may be performed using an oven under light-blocking conditions. The heat treatment may be performed at a temperature of typically from about 40°C to about 300°C, and preferably from 40°C to 150°C. The heating may be performed for a time not critical, as long as being such a time as to complete the curing reaction of the precursor material for three-dimensional cross-linked polymer matrix (cationically polymerizable compound) in the system. The heating time is typically from about 10 minutes to about 5 hours, and preferably from 10 minutes to 3 hours. The heating, if performed for a time shorter than 10 minutes, may fail to complete the curing reaction even when a

downstream aging process is performed. In contrast, the heating, if performed for a time longer than 5 hours, may cause the radically polymerizable compound to undergo a reaction, and this may cause the medium to have sufficient hologram properties with difficulty. After the heat treatment, the article may be left stand for a predetermined time to be aged. Such aging after the heat treatment can give a volume hologram recording layer that is highly resistant to moisture, is satisfactorily thermally stable, and less undergoes cure shrinkage.

The aging process is the process (step) of subjecting the cationically polymerizable compound(s) to a dark reaction under light-blocking conditions to settle the reaction in the medium. When curing of the cationically polymerizable compound(s) is insufficient even after the heat treatment, the aging process can complete the curing reaction of the cationically polymerizable compound(s) in the volume hologram recording layer. How the curing reaction proceeds may be verified herein typically in the following manner. Specifically, a layer is formed from the photosensitive composition for volume hologram recording layer formation and is subjected to the heat treatment. On the layer, the intensity ratio and/or area ratio of spectra between before and after the reaction is evaluated with an infrared spectrometer (IR); and/or the amount of change in heat output before and after the reaction is evaluated typically by DSC. The aging process also includes the subprocess of bringing the volume hologram recording medium after the heat treatment back to room temperature sufficiently. The volume hologram recording medium, when sufficiently brought back to room temperature after the heating, can offer stable hologram properties.

The aging in the aging process may be performed at a temperature not critical, but preferably from -15°C to lower than 40°C, particularly preferably from 0°C to 35°C, and most preferably room temperature (about 25°C). The aging may be performed for a time of typically from about 5 minutes to about 1 week, preferably from 10 minutes to 4 days, and particularly preferably from 30 minutes to 48 hours, while the aging time may be determined depending on the curing reaction time. The aging temperature and aging time is preferably selected suitably on a photosensitive composition basis, because the time necessary to completely cure cationically polymerizable groups (e.g., epoxy groups) varies depending on the formulation of the photosensitive composition for volume hologram recording layer formation.

The volume hologram recording layer in the volume hologram recording medium according to the present invention may have a thickness not critical, but typically from about 1 to about 2000 μm, and preferably from 10 to 1000 μm. In general, the volume hologram recording layer, when having a small thickness, may give a hologram with low angular selectivity, whereas the volume hologram recording layer, when having a large thickness, may give a hologram with high angular selectivity.

The volume hologram recording medium according to the present invention may have a transmittance not critical, but preferably 80% or more, and more preferably 85% or more. The transmittance" of the volume hologram recording medium is determined after the volume hologram recording medium is irradiated with a laser beam to polymerize the radically polymerizable compound in the volume hologram recording layer to record a hologram, and the hologram is fixed. Namely, the transmittance is determined after the completion of the reaction of the radically polymerizable compound. As used herein the term transmittance" refers to a transmittance determined at a recording wavelength (equal to a reading wavelength). The volume hologram recording medium, when having a transmittance of 80% or more, may loss less energy and enable efficient reading of the recorded hologram. In contrast, the volume hologram recording medium, if having a transmittance less than 80%, may disadvantageously suffer typically from a high noise level.

The substrates (base materials) for use in the volume hologram recording medium according to the present invention are not limited, as long as having transparency. Such substrates are exemplified by glass plates; and plastic films (including sheets) such as cycloolefinic polymer films (e.g., TOPAS supplied by Daicel Corporation), polyethylene films, polypropylene films, poly(ethylene fluoride) films, poly(vinylidene fluoride) films, poly(vinyl chloride) films, poly(vinylidene chloride) films, poly(methyl methacrylate) films, polycarbonate (PC) films, polyethersulfone films, poly(ether ketone) films, polyamide films, tetrafluoroethylene-perfluoroalkyl vinyl ether copolymer films, polyester films (e.g., poly(ethylene terephthalate) (PET) films), and polyimide films. The volume hologram recording medium may include each of different types of substrates alone or in combination. Specifically, the pair of substrates (first substrate and second substrate) may include identical or different types of substrates.

Hologram recording (writing) in the volume hologram recording medium according to the present invention may be performed by any of known hologram recording methods. Specifically, hologram recording may be performed by a method of irradiating the volume hologram recording medium with a laser beam to polymerize the radically polymerizable compound in the photosensitive composition for volume hologram recording layer formation. More specifically, exemplary hologram recording methods or processes include a contact exposure process; a single-beam interference process; a two-beam interference process; and a collinear process. In the contact exposure process, the volume hologram recording medium is brought into intimate contact with a master plate and is irradiated with a laser beam from the transparent substrate film (base film) surface to perform interference exposure to thereby record a volume hologram. The single-beam interference process is employed when the medium includes the volume hologram recording layer disposed between a pair of glass or films. In this process, the medium is brought into intimate contact with a master plate, and a laser beam is applied through the surface of the medium to the master plate. Thus, a hologram is recorded by interference between a reflected laser beam from the master plate and the incident laser beam. In the two-beam interference process,

laser beams are divided into two directions, one of which is applied directly to the photosensitive material; and the other is applied once to a substance having information to be recorded and passes through the substance, and the resulting beam (signal beam; object beam) is then applied to the photosensitive material to record or write a hologram. In the collinear process, a signal beam and a reference beam are applied coaxially.

The hologram recording as above may employ visible laser beams emitted typically from argon ion laser (458 nm, 488 nm, or 514.5 nm), krypton ion laser (647.1 nm), helium-neon ion laser (633 nm), YAG laser (532 nm), and semiconductor laser (405 nm or 532 nm).

After the interference exposure, the medium may be subjected to a treatment as appropriate so as to accelerate refractive-index modulation and to complete (to settle) the polymerization reaction. The treatment is exemplified by whole image exposure (entire surface exposure) to an ultraviolet ray; and heating.

The photosensitive composition for volume hologram recording layer formation is used to record a hologram according to a mechanism as follows. Specifically, when the volume hologram recording layer undergoes interference exposure using a laser beam, the radically polymerizable compound begins to be polymerized in a portion irradiated with strong light, and accompanied with this, concentration gradient of the radically polymerizable compound occurs, and the radically polymerizable compound diffuses and moves from a portion irradiated with weak light to the portion irradiated with strong light. This causes the density (difference in density) of the radically polymerizable compound depending on the intensity (difference in intensity) of the interference fringes to appear as a difference in refractive index. The difference in refractive index enables the recording of a hologram.

The volume hologram recording medium according to the present invention includes a three-dimensional cross-linked polymer matrix in the volume hologram recording layer. The three-dimensional cross-linked polymer matrix is formed by polymerizing the cationically polymerizable compound(s) including the compound represented by Formula (1) in the presence of the compound containing an active-proton-containing functional group. The volume hologram recording medium thereby less undergoes cure shrinkage and offers excellent multiple recording properties. Dynamic range (M/#; in terms of 1 mm) is an index for multiple recording properties and is expressed as the total sum of the square roots of diffraction efficiencies of individual channels determined upon multiple recording. The volume hologram recording medium may have a dynamic range of typically 10 or more (e.g., from 10 to 100), preferably 15 or more, and particularly preferably 20 or more. The volume hologram recording medium may have a cure shrinkage percentage of typically 1% or less, preferably 0.5% or less, and particularly preferably 0.3% or less. The dynamic range and cure shrinkage percentage refer to values determined by evaluation methods described in the examples below. Examples

The present invention will be illustrated in further detail with reference to several examples below. It should be noted, however, that the examples are by no means intended to limit the scope of the present invention.

Optical System

Fig. 1 is a schematic diagram illustrating an optical system used in the measurements of the diffraction efficiency and shrinkage percentage. Laser beams emitted from a 532-nm semiconductor laser used as a light source traveled via mirror (M), spatial filters (OL and Ph), a planoconvex lens (PCL), and a wave plate (PP) and were split into two beams by a beam splitter (BS). The two beams split by the BS were applied via mirrors to the sample at angles of 30 degrees each and thereby interfered. The intensities of a diffracted beam and a transmitted beam were detected with power meters (PM: supplied by ADC Corporation).

Diffraction Efficiency

A hologram was recorded by the two-beam interference process, and the diffraction efficiency of the hologram was measured using the power meters. Two laser beams emitted from the 532-nm semiconductor laser having an aperture of 5 in diameter were applied each at an incident angle of 30 degrees, and a transmitted beam and a diffracted beam were detected. The volume hologram recording medium was axially rotated at angles from -5 degrees to 5 degrees, and, at a position where the diffracted beam intensity reached maximum, the diffraction efficiency η was calculated according to Formula (2):

$$\eta = L_1/(L_0+L_1) \qquad (2)$$

where $L_0$ represents the intensity of the transmitted beam; and $L_1$ represents the intensity of the diffracted beam.

Cure Shrinkage Percentage

A sample volume hologram recording medium was placed at an inclination of 10 degrees, and a hologram was recorded using a recording beam (signal beam) and a reference beam respectively at angles of 20 degrees and 40 degrees. Thereafter the reference beam was applied at an incident angle of 40 degrees, and an angle ($\theta_1$) at which the medium exhibited a maximum diffraction efficiency was detected. If the recording medium does not shrink, the maximum diffraction efficiency be obtained at an angle of 40 degrees. However, if the recording medium shrinks, the angle deviates from 40 degrees. In addition, the recording beam alone was applied at an incident angle of 20 degrees, and an angle ($\theta_2$) at which the recording medium exhibited a maximum diffraction efficiency was detected in the same manner as above. Using the measured angles, grating vectors ($K_1$ and $K_2$) of the recording medium in a thickness direction were determined according to Formulae (3) and (4), based on which the cure shrinkage percentage was calculated according to Formula (5). The light source to emit the recording beam and reference beam was as in the diffraction efficiency measurement.

$$K_1 = (2\pi/\lambda)\{(n^2-\sin^2\theta_1)^{1/2}\}-(n^2-\sin^2\theta_2)^{1/2}\}\} \quad (3)$$

where $\lambda$ represents the recording wavelength; n represents the refractive index of the recording layer; and $\theta_1$ and $\theta_2$ represents incident angles (40 degrees and 20 degrees) before recording,

$$K_2 = (2\pi/\lambda)\{(n^2-\sin^2\theta_1')^{1/2}\}-(n^2-\sin^2\theta_2')^{1/2}\}\} \quad (4)$$

where $\lambda$ represents the recording wavelength; n represents the refractive index of the recording layer; and $\theta_1$' and $\theta_2$' represents incident angles at which the diffraction efficiency reaches maximum,

Cure shrinkage percentage (%) = $(K_1-K_2)/K_1\times100$ (5) where $K_1$ represents the grating vector before recording; and $K_2$ represents the grating vector after recording.

Multiple Recording Properties

The multiple recording properties were evaluated based on the dynamic range (M/#) as calculated according to Formula (6):
[Math. 1]

$$M/\# = \sum_{i}^{n}\sqrt{\eta_i} \quad (6)$$

where $\eta$) represents the diffraction efficiency; and i and n each represent the number of recording channels.

Example 1

Materials were blended and stirred at room temperature to dissolve individual components uniformly and yielded a photosensitive composition for volume hologram recording layer formation. The materials were 48 parts by weight of 3,4,3',4'-diepoxybicyclohexyl and 24 parts by weight of 2-ethylhexyl vinyl ether as cationically polymerizable compounds; 5.9 parts by weight of isopropanol as a compound containing an active-proton-containing functional group; 0.8 part by weight (amount as a solution having a solids concentration of 32.3 percent by weight) of a triphenylsulfonium salt (trade name San-Aid SI-60L, supplied by SANSHIN CHEMICAL INDUSTRY CO., LTD.) as a thermal acid generator; 24 parts by weight of hydroxyethylated o-phenylphenol acrylate (trade name A-LEN-10, supplied by Shin-Nakamura Chemical Co., Ltd.) as a radically polymerizable compound; 2.4 parts by weight (amount as a solution having a solids concentration of 40 percent by weight) of 3,3',4,4'-tetra(t-butylperoxycarbonyl)benzophenone as a photo-radical polymerization initiator; and 0.08 part by weight of a cyanine dye as a sensitizing dye.

The above-prepared photosensitive composition for volume hologram recording layer formation was placed with a 100-$\mu$m thick spacer film (PET) between a pair of glass substrates (3 cm long by 3 cm wide by 1 mm thick), and the periphery of the resulting assembly was sealed. The assembly was heated in an oven at 90°C for one hour, retrieved from the oven after heating, aged at room temperature (about 25°C) for one hour, and thereby yielded a volume hologram recording medium. The medium included a volume hologram recording layer having a thickness of 100 $\mu$m. The volume

hologram recording medium was subjected to transmission hologram recording using semiconductor laser at a wavelength of 532 nm, a light intensity of 1 $mW/cm^2$, and an exposure energy of 100 $mJ/cm^2$. The volume hologram recording medium offered a dynamic range (M/#; in terms of 1 mm) of 22 and a cure shrinkage percentage of 0.3%.

Examples 2 to 8 and Comparative Examples 1 to 3

Photosensitive compositions for volume hologram recording layer formation were prepared, from which volume hologram recording media were produced, and the dynamic ranges (M/#; in terms of 1 mm) and cure shrinkage percentages of the media were measured by the procedure of Example 1, except for employing formulations (in part by weight) and heating conditions as given in Table 1. The blending amounts of the photo-radical polymerization initiator (3,3',4,4'-tetra(t-butylperoxycarbonyl)benzophenone) in Table 1 are indicated each as a blending amount of a solution having a solids concentration of 40 percent by weight. Likewise, the blending amounts of the thermal acid generator in Table 1 are indicated each as a blending amount of a solution having a solids concentration of 32.3 percent by weight. Results are summarized and given in the table:

[Table 1]

TABLE 1

| | | Ex. 1 | Ex. 2 | Ex. 3 | Ex. 4 | Ex. 5 | Ex. 6 | Ex. 7 | Ex. 8 | Com. Ex. 1 | Com. Ex. 2 | Com. Ex. 3 |
|---|---|---|---|---|---|---|---|---|---|---|---|---|
| Cationically polymerizable compound | a-1 | 48 | 48 | 48 | 48 | 48 | 48 | 48 | 48 | 48 | 48 | 48 |
| | a-2 | 24 | 24 | 24 | 24 | 24 | 24 | 24 | 24 | 24 | 24 | 24 |
| Compound containing active-proton-containing functional group | b-1 | 5.9 | | | | | | | | | 11.8 | |
| | b-2 | | 5 | | | | | | | | | |
| | b-3 | | | 5.7 | | | | | | | | |
| | b-4 | | | | 9.1 | 3.2 | | | | | | 0.3 |
| | b-5 | | | | | | 3.2 | | | | | |
| | b-6 | | | | | | | 3.2 | | | | |
| | b-7 | | | | | | | | 4.9 | | | |
| Ratio between functional groups (b/a-1) | | 0.2 | 0.23 | 0.2 | 0.19 | 0.07 | 0.03 | 0.02 | 0.2 | - | 0.4 | 0.007 |
| Thermal acid generator | c-1 | 0.8 | 0.8 | 0.8 | 0.8 | 0.8 | 0.8 | 0.8 | 0.8 | 0.8 | 0.8 | 0.8 |
| Radically polymerizable compound | d-1 | 24 | 24 | 24 | 24 | 24 | 24 | 24 | 24 | 24 | 24 | 24 |
| Photo-radical polymerization initiator | e-1 | 2.4 | 2.4 | 2.4 | 2.4 | 2.4 | 2.4 | 2.4 | 2.4 | 2.4 | 2.4 | 2.4 |
| Sensitizing dye | f-1 | 0.08 | 0.08 | 0.08 | 0.08 | 0.08 | 0.08 | 0.08 | 0.08 | 0.08 | 0.08 | 0.08 |
| Heating conditions | | 90°C for 30 min | 90°C for 30 min | 90°C for 30 min | 90°C for 45 min | 90°C for 45 min | 90°C for 45 min | 90°C for 45 min | 90°C for 60 min | 90°C for 30 min | 90°C for 45 min | 90°C for 30 min |
| Recording layer thickness (μm) | | 100 | 100 | 100 | 100 | 100 | 100 | 100 | 100 | 100 | 100 | 100 |
| Cure shrinkage percentage (%) | | 0.3 | 0.4 | 0.3 | 0.6 | 0.5 | 0.4 | 0.5 | 0.3 | 0.2 | 0.7 | 0.3 |
| M/# (in terms of 1-mm) | | 22 | 19 | 27 | 34 | 41 | 38 | 45 | 50 | 15 | 8 | 14 |

The compounds indicated in Table 1 are as follows:

Cationically Polymerizable Compound

a-1: 3,4,3',4'-Diepoxybicyclohexyl
a-2: 2-Ethylhexyl vinyl ether

Compound Containing Active-Proton-Containing Functional Group

b-1: Isopropanol
b-2: 1,3-Butanediol
b-3: Allyl alcohol
b-4: Polyethylene glycol 200
b-5: Polyethylene glycol 400
b-6: Polyethylene glycol 600
b-7: Neopentyl glycol

Thermal Acid Generator

c-1: Triphenylsulfonium salt (trade name San-Aid SI-60L, supplied by SANSHIN CHEMICAL INDUSTRY CO., LTD.)

Radically Polymerizable Compound

d-1: Hydroxyethylated o-phenylphenol acrylate (trade name A-LEN-10, supplied by Shin-Nakamura Chemical Co., Ltd.) Photo-Radical Polymerization Initiator
e-1: 3,3',4,4'-Tetra(t-butylperoxycarbonyl)benzophenone (trade name BTTB, supplied by NOF CORPORATION)

Sensitizing Dye

f-1: Cyanine dye (3-Ethyl-2-[3-(3-ethyl-5-phenyl-2-benzoxazolinylidene)propenyl]-5-phenylbenzoxazolium bromide)

Industrial Applicability

The photosensitive composition for volume hologram recording layer formation according to the present invention includes the compound containing an active-proton-containing functional group, where the compound reacts with a cationically polymerized chain end to cause a chain transfer reaction upon the formation of a matrix. This allows the resulting polymer constituting a three-dimensional cross-linked polymer matrix to have a lower low molecular weight and also allows the photosensitive composition to offer better cationic curability. The photosensitive composition can thereby form a three-dimensional cross-linked polymer matrix that is highly resistant to moisture, satisfactorily thermally stable, and moderately rigid and bears finely divided free space. Thus, the photosensitive composition can form a volume hologram recording layer that has high sensitivity and excellent multiple recording properties and less undergoes cure shrinkage. The use of the photosensitive composition for volume hologram recording layer formation according to the present invention can provide a volume hologram recording medium that has a large storage capacity, offers high refractive-index modulation, and less suffers from volume change as a result of photoirradiation.

## Claims

**1.** A photosensitive composition for volume hologram recording layer formation, the photosensitive composition comprising following components:

(A) at least one cationically polymerizable compound comprising a compound represented by Formula (1);
(B) a compound comprising an active-proton-containing functional group;
(C) a thermal acid generator;
(D) a radically polymerizable compound; and

(E) a radical-polymerization initiator,

Components (A), (B), and (C) constituting a precursor material for three-dimensional cross-linked polymer matrix, Components (A), (B), and (C) being present in the precursor material for three-dimensional cross-linked polymer matrix in such proportions that a molar ratio of the active-proton-containing functional group of Component (B) to cycloaliphatic epoxy groups of the compound represented by Formula (1) in Component (A) is from 0.01 to 0.3, Formula (1) being expressed as follows:

[Chem. 1]

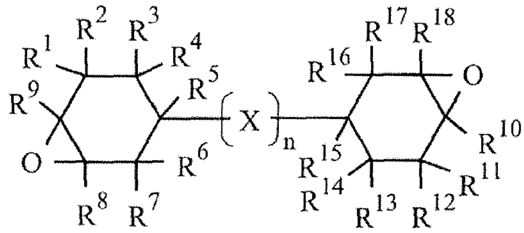

(1)

wherein n represents an integer from 0 to 10; X represents, independently in each occurrence, one divalent group selected from the group consisting of oxygen, $-CH_2-$, $-C(CH_3)_2-$, $-CBr_2-$, $-C(CBr_3)_2-$, $-CF_2-$, $-C(CF_3)_2-$, $-CCl_2-$, $-C(CCl_3)_2-$, and $-CH(C_6H_5)-$, where, when n is 2 or more, two or more occurrences of X may be identical or different; $R^1$ to $R^{18}$ are each, identically or differently, selected from hydrogen, halogen, a hydrocarbon group optionally comprising oxygen or halogen, and optionally substituted alkoxy.

**2.** The photosensitive composition for volume hologram recording layer formation according to claim 1, wherein the at least one cationically polymerizable compound as Component (A) further comprises at least one cationically polymerizable compound selected from the group consisting of:

epoxy compounds excluding the compound represented by Formula (1);
oxetane compounds; and
vinyl ether compounds.

**3.** A volume hologram recording medium comprising a volume hologram recording layer, the volume hologram recording layer being prepared by heat-treating the photosensitive composition for volume hologram recording layer formation according to one of claims 1 and 2, the volume hologram recording layer comprising:

a three-dimensional cross-linked polymer matrix;
the radically polymerizable compound as Component (D); and
the radical-polymerization initiator as Component (E).

[Fig. 1]

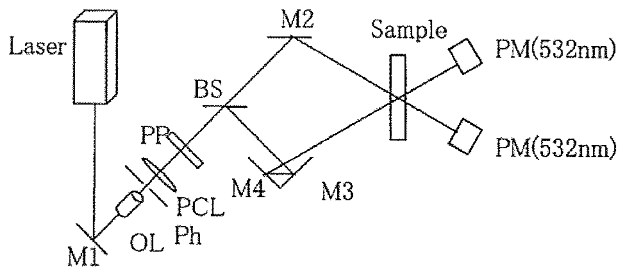

**INTERNATIONAL SEARCH REPORT**

International application No.
PCT/JP2013/077626

A. CLASSIFICATION OF SUBJECT MATTER
*G03H1/02*(2006.01)i, *C08L63/00*(2006.01)i, *G11B7/24035*(2013.01)i, *G11B7/244* (2006.01)i

According to International Patent Classification (IPC) or to both national classification and IPC

B. FIELDS SEARCHED

Minimum documentation searched (classification system followed by classification symbols)
G03H1/02, C08L63/00, G11B7/24035, G11B7/244

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | WO 2012/026298 A1 (Daicel Chemical Industries, Ltd.), 01 March 2012 (01.03.2012), paragraphs [0019] to [0023], [0029] to [0038], [0041], [0059] to [0067], [0070] & CN 102971677 A & TW 201219975 A | 1-3 |
| A | JP 2011-118363 A (Daicel Chemical Industries, Ltd.), 16 June 2011 (16.06.2011), paragraphs [0016] to [0033], [0035], [0051] to [0065] (Family: none) | 1-3 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 December, 2013 (03.12.13) | 17 December, 2013 (17.12.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2013/077626

C (Continuation). DOCUMENTS CONSIDERED TO BE RELEVANT

| Category* | Citation of document, with indication, where appropriate, of the relevant passages | Relevant to claim No. |
|---|---|---|
| A | WO 2010/052851 A1 (Daicel Chemical Industries, Ltd.), 14 May 2010 (14.05.2010), paragraphs [0040] to [0049], [0055], [0094] to [0121] & US 2011/0200918 A1 & CN 102209939 A & TW 201027248 A & KR 10-2011-0093781 A | 1-3 |
| A | WO 2009/110162 A1 (Daicel Chemical Industries, Ltd.), 11 September 2009 (11.09.2009), examples 9, 10 & US 2011/0008577 A1 & EP 2261007 A1 & CN 101945750 A & KR 10-2010-0137437 A & TW 200944938 A | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012227784 A
- JP 2008152170 A
- WO 2009014133 A
- JP 2009242242 A
- JP 2008266308 A